# EUROPÄISCHE PATENTSCHRIFT

(11) **EP 1 153 810 B1**
(45) Veröffentlichungstag und Bekanntmachung des Hinweises auf die Patenterteilung: **31.03.2004**
(21) Anmeldenummer: 01109097.4
(22) Anmeldetag: 12.04.2001
(51) Int. Cl.: B60R 21/34

(54) **Sicherheitseinrichtung an einem Fahrzeug, insbesondere an einem Kraftfahrzeug**
Safety device for a vehicle, in particular for a motor vehicle
Dispositif de sécurité pour véhicule, notamment pour un véhicule automobile

(30) Priorität: 29.04.2000 DE 10021143
(43) Veröffentlichungstag der Anmeldung: 14.11.2001
(73) Patentinhaber: Volkswagen Aktiengesellschaft, 38436 Wolfsburg (DE)
(72) Erfinder: Sinnhuber, Ruprecht, 38518 Gifhorn (DE); Wohllebe, Thomas, 38110 Braunschweig (DE); Zogalla, Gerhard, 38471 Rühen (DE); Ries, Oskar, Dr., 38524 Sassenburg (DE)
(74) Vertreter: Neubauer, Hans-Jürgen, Dipl.-Phys.

(56) Entgegenhaltungen:
- DE-A- 2 711 338
- DE-A- 2 814 107
- DE-A- 19 721 565
- PATENT ABSTRACTS OF JAPAN vol. 1999, no. 13, 30. November 1999 (1999-11-30) & JP 11 208512 A (NISSAN MOTOR CO LTD), 3. August 1999 (1999-08-03)

## Beschreibung

Die Erfindung betrifft eine Sicherheitseinrichtung an einem Fahrzeug, insbesondere an einem Kraftfahrzeug, nach dem Oberbegriff des Anspruchs 1.

Eine gattungsgemäße Sicherheitseinrichtung an einem Kraftfahrzeug ist aus der DE 28 14 107 A1 bekannt. Diese Sicherheitseinrichtung umfasst eine Fronthaube sowie eine am Fahrzeug angeordnete Sensoreinrichtung, die jeweils Bestandteile der Sicherheitseinrichtung bilden, wobei die Sensoreinrichtung mit einer der Fronthaube zugeordneten Energiespeichereinheit als weiterem Bestandteil der Sicherheitseinrichtung gekoppelt ist. Diese Energiespeichereinheit hebt im durch die Sensoreinrichtung aktivierten Zustand die Fronthaube aus einer Fronthauben-Ruheposition in eine Fronthauben-Aufprallposition an, wobei die Energiespeichereinheit wenigstens zwei der Fronthaube zugeordnete Energiespeicher aufweist.

Konkret ist hier in einer ersten Ausführungsform die Fronthaube im Bereich eines dem Fahrzeugfrontend zugeordneten vorderen Haubenkantenbereichs um eine horizontale Drehachse schwenkbar angelenkt. An einem gegenüberliegenden hinteren Haubenkantenbereich ist ein Airbagmodul als Energiespeicher angeordnet, das einen mittels eines Gasgenerators aufblasbaren Airbag umfasst. Im durch die Sensoreinrichtung aktivierten Zustand des Airbagmoduls wird der Airbag aufgeblasen, wodurch die Fronthaube im Bereich des hinteren Haubenkantenbereichs angehoben und um die im vorderen Haubenkantenbereich angeordnete horizontale Drehachse nach oben verschwenkt wird.

In einer hierzu alternativen Ausführungsform ist in der DE 28 14 107 A1 vorgesehen, dass sowohl im hinteren Haubenkantenbereich als auch im vorderen Haubenkantenbereich jeweils ein Airbagmodul angeordnet ist, das jeweils einen Airbag mit zugeordnetem Gasgenerator umfasst. Bei einer durch die Sensoreinrichtung sensierten Kollision des Fahrzeugs mit einem Radfahrer, Fußgänger, etc. werden beide Airbagmodule gleichzeitig aktiviert und dadurch die beiden in etwa ein gleiches Volumen aufweisenden Airbags gleichzeitig aufgeblasen und zwar dergestalt, dass die Fronthaube stets im wesentlichen parallel zur Fronthauben-Ruheposition in die genau vorgegebene Fronthauben-Aufprallposition angehoben wird.

Durch dieses Anheben der Fronthaube wird bei beiden Ausführungsformen der Abstand der deformierbaren und dabei energieabsorbierenden Fronthaube zu darunterliegenden, nicht deformierbaren Fahrzeugteilen, wie z. B. einer Brennkraftmaschine, erhöht, so dass ein insgesamt größerer Verformungsweg zur Verfügung steht. Wesentlich ist hier, dass die Fronthaube stets nur in eine einzige, durch den Aufbau jeweils vorgegebene Fronthauben-Aufprallposition anhebbar ist. Unterschiede in den Kollisionsgegebenheiten, z. B. bei Kollisionen des Fahrzeugs mit Erwachsenen, Kindern, Radfahrern, werden somit hier nicht berücksichtigt.

Ebenso verhält es sich bei der JP 11208512, bei der die Fronthaube bei jeder Art von Aufprall in die stets gleiche Position angehoben wird, was dadurch erreicht wird, dass bei einer sensierten Kollision beide den Anhebemechanismus betätigenden Aktuatoren gleichzeitig aktiviert werden.

Weiter ist aus der DE 197 21 565 A1 ein Aufbau bekannt, bei der eine Anhebevorrichtung für eine Fronthaube in ein Fronthaubenschloss integriert ist. Im Falle einer Kollision des Fahrzeugs mit einem z. B. Fußgänger wird von einer Sensorvorrichtung eine Entriegelungsvorrichtung für das Fronthaubenschloss betätigt, wodurch eine zusätzliche Fronthauben-Aufstellfeder über einen vorgegebenen Öffnungsweg die Anhebung der Fronthaube in die einzige, d. h. stets gleiche Fronthauben-Aufprallposition freigibt. Zur Unterstützung der Fronthauben-Aufstellfeder kann zudem eine auslösbare Treibladung vorgesehen sein, wobei je nach der von der Sensorvorrichtung detektierten Kollisionsgeschwindigkeit die Anhebung der Fronthaube in die Aufprallstellung unterschiedlich angesteuert werden kann: bei geringer Geschwindigkeit wird die Anhebung nur durch die Aufstellfeder durchgeführt; bei größerer Geschwindigkeit wird die Anhebung ausschließlich oder in Verbindung mit der Treibladungseinrichtung vorgenommen, um die Zeit für die Anhebung zu verkürzen. D. h., dass mit der zusätzlichen Treibladung lediglich die Zeit der Anhebung zur Überführung der Fronthaube in die stets gleiche Fronthauben-Aufprallposition verkürzt wird.

Des weiteren ist aus der DE 27 11 338 A1 ein Aufbau bekannt, bei dem sich ein Airbag im Falle einer sensierten Fußgängerkollision schützend über den Bereich eines Windlaufs legt, wobei der Airbag zum Teil derart unterhalb eines nachgiebig gestalteten hinteren Fronthaubenrandes angeordnet ist, dass dieser von dem gefüllten Luftsack angehoben wird.

Aufgabe der Erfindung ist es daher, eine gattungsgemäße Sicherheitseinrichtung an einem Fahrzeug, insbesondere an einem Kraftfahrzeug, so weiterzuentwickeln, dass auch Unterschiede in den Kollisionsgegebenheiten im Falle einer Kollision mit dem Fahrzeug berücksichtigt werden können.

Diese Aufgabe wird mit den Merkmalen des Anspruchs 1 gelöst.

Gemäß Anspruch 1 sind die wenigstens zwei Energiespeicher in Abhängigkeit von durch die Sensoreinrichtung sensierten Kollisionsgegebenheiten unabhängig voneinander in beliebigen Kombinationen und/oder Zeitabständen aktivierbar dergestalt, dass die Fronthaube in unterschiedliche an die jeweils sensierten Kollisionsgegebenheiten entsprechend angepasste Fronthauben-Aufprallpositionen anhebbar ist.

Durch diese an die jeweiligen Kollisionsgegebenheiten angepasste Anhebung der Fronthaube in eine Fronthauben-Aufprallposition ist eine individuelle Anpassung der als Energieabsorptionsstruktur dienenden Fronthaube möglich. Das heisst, dass die Fronthaube je nach sensierter aktueller Kollisionsgegebenheit von Fall zu Fall in unterschiedliche Fronthauben-Aufprallposition angehoben werden kann, wie dies z. B. für eine optimierte Energieabsorption bei einer Kollision des Fahrzeugs mit Erwachsenen, Kindern, Radfahrern, etc erforderlich ist. Mit einer derartigen, an die jeweiligen Kollisionsgegebenheiten angepassten Fronthauben-Aufprallposition lässt sich somit für eine gezielte Energieabsorption ein auf die jeweiligen Kollisionsgegebenheiten optimierter Kraft-Weg-Verlauf bei einem Aufprall auf die Fronthaube einstellen.

Grundsätzlich ist es dabei möglich, dass eine Vielzahl von der Fronthaube zugeordneten Energiespeichern vorgesehen ist, die je nach den sensierten Kollisionsgegebenheiten einzeln, paarweise und/oder in beliebigen Kombinationen gleichzeitig oder zeitversetzt zueinander aktivierbar sind. Die Aktivierung kann dabei zentral durch die Sensoreinrichtung ggf. mit einer dieser nachgeschalteten Steuereinrichtung erfolgen.

In einer bevorzugten, konkreten Ausführungsform sind in Fahrzeuglängsrichtung gesehen vorzugsweise zu beiden Seiten der Fronthaube jeweils ein erster und ein zweiter Energiespeicher beabstandet voneinander im Bereich der Kotflügelbank angeordnet. Der erste Energiespeicher ist dabei einem vorderen Haubenkantenbereich der Fronthaube zugeordnet, während der zweite Energiespeicher einem hinteren Haubenkantenbereich der Fronthaube zugeordnet ist. Mit einem derartigen Aufbau ist sichergestellt, dass die Fronthaube je nach den sensierten Kollisionsgegebenheiten entweder parallel zur Fronthauben-Ruheposition anhebbar ist oder aber auch nur mit einem Teilbereich, z. B. dem hinteren Haubenkantenbereich, anhebbar ist. Selbstverständlich sind auch Zwischenpositionen möglich, falls dies erforderlich sein sollte. Weiter lässt sich mit einer derartigen Anordnung auch erreichen, dass die Fronthaube zuerst nur in einem hinteren Haubenkantenbereich angehoben wird und dann ggf. zeitversetzt dazu auch im vorderen Haubenkantenbereich angehoben wird. Insgesamt ergeben sich hier somit vielfältige Möglichkeiten, die Fronthaube aus der Fronthauben-Ruheposition in eine geeignete Fronthauben-Aufprallposition je nach den vorherrschenden Kollisionsgegebenheiten anzupassen.

In einer weiteren bevorzugten Ausführungsform ist vorgesehen, dass zwischen dem ersten und zweiten Energiespeicher ein dritter Energiespeicher vorgesehen ist. Dieser dritte Energiespeicher ist vorzugsweise näher zum ersten Energiespeicher hin versetzt als zum zweiten Energiespeicher. Mit einem derartigen dritten Energiespeicher wird die Öffnungskinematik der Fronthaube zusätzlich günstig beeinflusst, wobei ein derartiger dritter Energiespeicher insbesondere ein Verschwenken der Fronthaube um eine beispielsweise im vorderen Haubenkantenbereich liegende Drehachse unterstützen kann. Daneben ist mit einem derartigen Energiespeicher auch eine noch gezieltere Abstützung und damit eine noch gezieltere Krafteinleitung bzw. -umleitung in die Kotflügelbank möglich. Es können auch noch weitere Energiespeicher vorgesehen sein, wobei insbesondere auch vorgesehen sein kann, dass zu beiden Fahrzeugseiten jeweils eine unterschiedliche Anzahl von Energiespeichern im Bereich der Kotflügelbank angeordnet und der Fronthaube zugeordnet ist.

Der Energiespeicher wird vorzugsweise durch eine bei einem Aufprall kraftbegrenzt nachgebende Zylinder-Kolben-Einheit und/oder durch ein Airbagmodul gebildet. Je nach den Einbaubedingungen und -situationen kann auch eine Kombination von Zylinder-Kolben-Einheiten und Airbagmodulen vorgesehen sein, z. B. kann der zweite Energiespeicher, der einem hinteren Haubenkantenbereich der Fronthaube zugeordnet ist, durch ein Airbagmodul gebildet sein, während der dem vorderen Haubenkantenbereich zugeordnete erste Energiespeicher durch eine Zylinder-Kolben-Einheit gebildet sein kann. Auch hier ergibt sich eine hohe Flexibilität hinsichtlich des Aufbaus und somit eine gute und einfache Anpassbarkeit an die jeweiligen Einbauerfordemisse.

Der Energiespeicher ist vorzugsweise pyrotechnisch aktivierbar. Dadurch ergeben sich neben einer hohen Funktionssicherheit auch die erforderlichen kurzen Ansprechzeiten.

In einer bevorzugten Ausführungsform umfasst jede Zylinder-Kolben-Einheit einen ortsfest am Fahrzeug angeordneten Zylinder, in dem ein Kolben mitsamt Kolbenstange verschiebbar geführt ist. Ein freies Kolbenstangenende ist hier mit der Fronthaube gekoppelt. Neben der durch die Fronthaubendeformation erfolgenden Energieabsorption ist hier auch eine gezielte Energieabsorption durch kraftbegrenztes Nachgeben der Zylinder-Kolben-Einheit möglich. Insbesondere ist dieses kraftbegrenzte Nachgeben in Abhängigkeit von der Aufprallkraft mit einer gezielten Kraft-Weg-Kennung möglich, so dass hiermit eine kontrollierte und optimierte Energieabsorption gegeben ist. Insgesamt kann somit hier die Wucht eines Aufpralls durch dieses kraftbegrenzte Nachgeben gezielt und kontrolliert aufgefangen werden. Dabei können die als Energiespeicher ausgebildeten Zylinder-Kolben-Einheiten je nach Anbringungsort auch unterschiedliche Schwellenwerte für ein kraftbegrenztes Nachgeben aufweisen. Damit ist eine nochmalige zusätzliche, vorteilhafte Einstellmöglichkeit bezüglich der Energieabsorption gegeben.

Falls der Energiespeicher durch ein Airbagmodul gebildet ist, ist vorgesehen, dass jedes Airbagmodul wenigstens einen ein- oder mehrkammrigen Airbag sowie einen dem wenigstens einen Airbag zugeordneten ein- oder mehrstufigen Gasgenerator umfasst. Der wenigstens eine Airbag weist dabei in herkömmlicher Weise wenigstens eine Ausströmöffnung auf, über die bei einem Aufprall auf die Fronthaube ein Luftaustritt für ein Nachgeben des Airbags im Rahmen einer Energieabsorption mit einer gezielten Kraft-Weg-Kennung möglich ist. Über die Anzahl und Art der Ausströmöffnungen kann dabei z.B. die Standzeit und damit die Energieabsorptionsbedingungen beeinflusst werden. Je nach sensierter Aufprallsituation kann der wenigstens eine Airbag dabei teilweise oder vollständig aufgeblasen werden.

In einer bevorzugten Ausführungsform hierzu ist vorgesehen, dass ein einem hinteren Haubenkantenbereich zugeordneter Airbag im aktivierten Zustand gleichzeitig auch als Scheibenairbag wenigstens einen Teilbereich einer Frontscheibe abdeckt. Der Scheibenairbag kann dabei eine zusätzliche Kammer des Airbags sein, die zeitversetzt zu einer die Fronthaube anhebenden Hauptkammer aufblasbar ist. Dies kann z.B. durch entsprechende Überströmöffnungen zwischen den einzelnen Airbagkammem gesteuert werden.

In einer alternativen Ausführungsform kann im Bereich der hinteren Haubenkante der Fronthaube auch ein separates Scheibenairbagmodul vorgesehen sein, das im aktivierten Zustand ebenfalls wenigstens einen Teilbereich einer Frontscheibe abdeckt. Ein derartiges separates Scheibenairbagmodul ist insbesondere in Verbindung mit als Zylinder-Kolben-Einheiten ausgebildeten Energiespeichern vorteilhaft. Mit einem derartigen Scheibenairbag wird erreicht, dass bei einem Aufprall auf die Fronthaube auch der Scheibenbereich entsprechend abgedeckt ist.

In einer bevorzugten Ausführungsform ist die Sensoreinrichtung zur Erfassung einer drohenden Kollision sowie zur Erfassung der jeweiligen Kollisionsgegebenheiten als pre-crash-Sensoreinrichtung und/oder als early-crash-Sensoreinrichtung ausgebildet. Damit wird auf vorteilhafte Weise erreicht, dass bereits vor einer unmittelbaren Kollision mit dem Fahrzeug die erforderlichen Maßnahmen zur Einnahme einer an die jeweiligen Kollisionsgegebenheiten angepassten Fronthauben-Aufprallposition einstellbar sind.

Anhand einer Zeichnung wird die Erfindung näher erläutert.

Es zeigen:
- Fig. 1: eine schematische Seitenansicht eines Fahrzeugs mit einer ersten Ausführungsform einer erfindungsgemäßen Sicherheitseinrichtung mit einer Fronthaube in einer Fronthauben-Ruheposition,
- Fig. 2: eine schematische Seitenansicht gemäß Fig. 1 mit einer ersten Einstellmöglichkeit der Fronthauben-Aufprallposition,
- Fig. 3: eine schematische Seitenansicht gemäß Fig. 1 mit einer zweiten Einstellmöglichkeit der Fronthauben-Aufprallposition,
- Fig. 4: eine schematische Seitenansicht eines Fahrzeugs mit einer zweiten Ausführungsform einer erfindungsgemäßen Sicherheitseinrichtung mit einer Fronthaube in einer Fronthauben-Ruheposition,
- Fig. 5: eine schematische Seitenansicht gemäß Fig. 4 mit einer ersten Einstellmöglichkeit der Fronthauben-Aufprallposition,
- Fig. 6: eine schematische Seitenansicht gemäß Fig. 4 mit einer zweiten Einstellmöglichkeit der Fronthauben-Aufprallposition,
- Fig. 7: eine schematische Seitenansicht eines Fahrzeugs mit einem separaten Scheibenairbag, und
- Fig. 8: eine schematische Seitenansicht eines Fahrzeugs mit einer Zylinder-Kolben-Einheit zur Anhebung der Fronthaube und einem separaten Scheibenairbag.

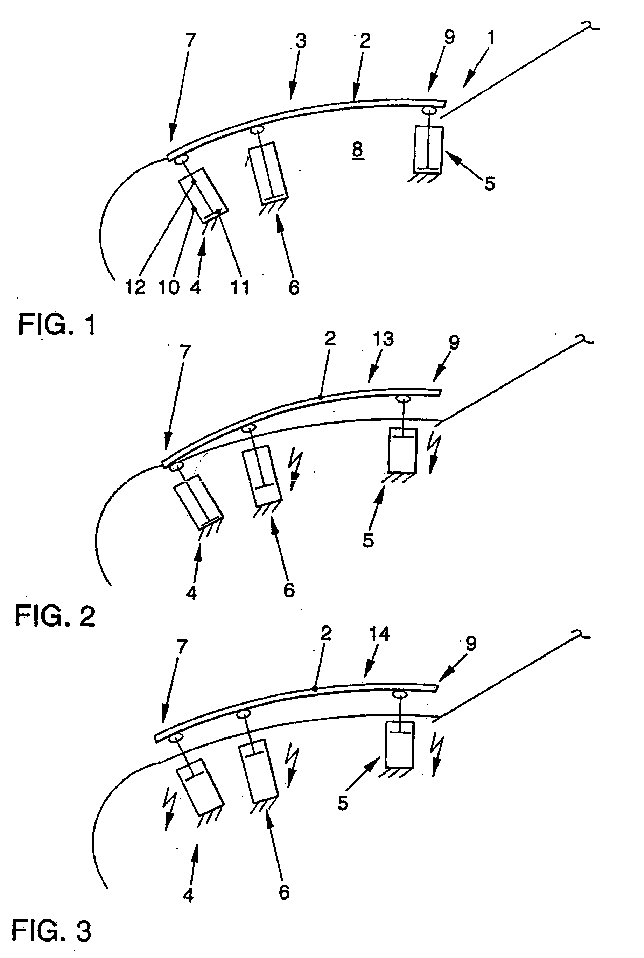

In der Fig. 1 ist schematisch eine Seitenansicht eines Fahrzeugs 1 dargestellt. Dieses Fahrzeug 1 umfasst eine Fronthaube 2, die sich in der Darstellung der Fig. 1 in einer Fronthauben-Ruheposition 3 befindet.

Die Fronthaube 2 ist mit drei Zylinder-Kolben-Einheiten 4, 5, 6 als Energiespeicher gekoppelt. Vorzugsweise sind in Fahrzeugslängsrichtung gesehen zu beiden Seiten der Fronthaube 2 jeweils drei Zylinder-Kolben-Einheiten 4, 5, 6 beabstandet voneinander im Bereich der Kotflügelbank 8 angeordnet.

Eine erste Zylinder-Kolben-Einheit 4 ist einem vorderen Haubenkantenbereich 7 der Fronthaube 2 zugeordnet, während eine zweite Zylinder-Kolben-Einheit 5 einem hinteren Haubenkantenbereich 9 der Fronthaube 2 zugeordnet ist. Zwischen dieser ersten Zylinder-Kolben-Einheit 4 und der zweiten Zylinder-Kolben-Einheit 5 ist eine dritte Zylinder-Kolben-Einheit 6 vorgesehen, die näher zur ersten Zylinder-Kolben-Einheit 4 hin versetzt ist als zur zweiten Zylinder-Kolben-Einheit 5.

Jede dieser Zylinder-Kolben-Einheiten 4, 5, 6 umfasst einen ortsfest am Fahrzeug angeordneten Zylinder 10, in dem ein Kolben 11 mitsamt Kolbenstange 12 verschiebbar geführt ist. Ein freies Kolbenstangenende der Kolbenstange 12 ist jeweils mit einer Unterseite der Fronthaube 2 gekoppelt.

Die Zylinder-Kolben-Einheiten 4, 5, 6 sind mit einer am Fahrzeug, vorzugsweise am Fahrzeugfrontend angeordneten Sensoreinrichtung gekoppelt, die hier nicht dargestellt ist. Diese Sensoreinrichtung ist zur Erfassung einer drohenden Kollision sowie zur Erfassung der jeweiligen Kollisionsgegebenheiten als pre-crash-Sensoreinrichtung und/oder als earlycrash-Sensoreinrichung ausgebildet.

Im Falle einer mittels der hier nicht dargestellten pre-crash-Sensoreinrichtung und/oder early-crash-Sensoreinrichtung sensierten Kollision eines Fußgängers, Radfahrers, etc. mit dem Fahrzeug 1 können die Zylinder-Kolben-Einheiten 4, 5, 6 in Abhängigkeit von den jeweils sensierten Kollisionsgegebenheiten unabhängig voneinander in beliebigen Kombinationen und/oder Zeitabständen pyrotechnisch aktiviert werden, so dass die Fronthaube 2 in eine an die jeweils sensierte Kollisionsgegebenheit entsprechend angepasste Fronthauben-Aufprallposition anhebbar ist, wie dies in den Fig. 2 und 3 für zwei beispielhaft ausgewählte Einstellmöglichkeiten dargestellt ist.

So kann beispielsweise bei einer Kollision des Fahrzeugs 1 mit einem Kind zuerst lediglich die zweite Zylinder-Kolben-Einheit 5 aktiviert werden, wie dies in der Fig. 2 dargestellt ist, während die erste Zylinder-Kolben-Einheit 4 nicht aktiviert wird. Gleichzeitig oder zeitversetzt dazu kann auch die dritte Zylinder-Kolben-Einheit 6 zur Unterstützung der zweiten Zylinder-Kolben-Einheit 5 aktiviert werden, wie dies in der Fig. 2 ebenfalls schematisch dargestellt ist. Insgesamt wird dadurch die Fronthaube 2, wie dies der Fig. 2 entnommen werden kann, um eine im Bereich des vorderen Haubenkantenbereichs 7 liegende Drehachse verschwenkt und in eine Fronthauben-Aufprallposition 13 angehoben. In dieser angehobenen Position der Fronthaube 2 wird gegenüber der Fronthauben-Ruheposition 3, wie dies in der Fig. 1 dargestellt ist, ein Deformationsabstand im wesentlichen im hinteren Haubenkantenbereich 9 zu darunterliegenden, nicht deformierbaren Fahrzeugteilen, wie z. B. einer Brennkraftmaschine, geschaffen.

Alternativ dazu kann die Fronthaube 2 auch, wie dies in der Fig. 3 schematisch dargestellt ist, durch eine im wesentlichen gleichzeitige Zündung der Zylinder-Kolben-Einheiten 4, 5, 6, wie dies beispielsweise bei einer Kollision des Fahrzeugs 1 mit einem Erwachsenen der Fall ist, in eine Fronthauben-Aufprallposition 14 angehoben werden, die in etwa parallel zur Fronthauben-Ruheposition 3 ist. Dadurch wird über die gesamte Fronthaube 2 hinweg ein in etwa gleicher Deformationsabstand zu darunterliegenden, nicht deformierbaren Fahrzeugteilen geschaffen.

Weiter ist es auch möglich, die Fronthaube 2 im Verlauf einer Kollision des Fahrzeugs 1 mit einem Fußgänger, Radfahrer, etc. aus der in der Fig. 2 dargestellten Fronthauben-Aufprallposition 13 durch entsprechend zeitversetzte Aktivierung der ersten Zylinder-Kolben-Einheit 4 in die in der Fig. 3 dargestellte Fronthauben-Aufprallposition 14 zu überführen.

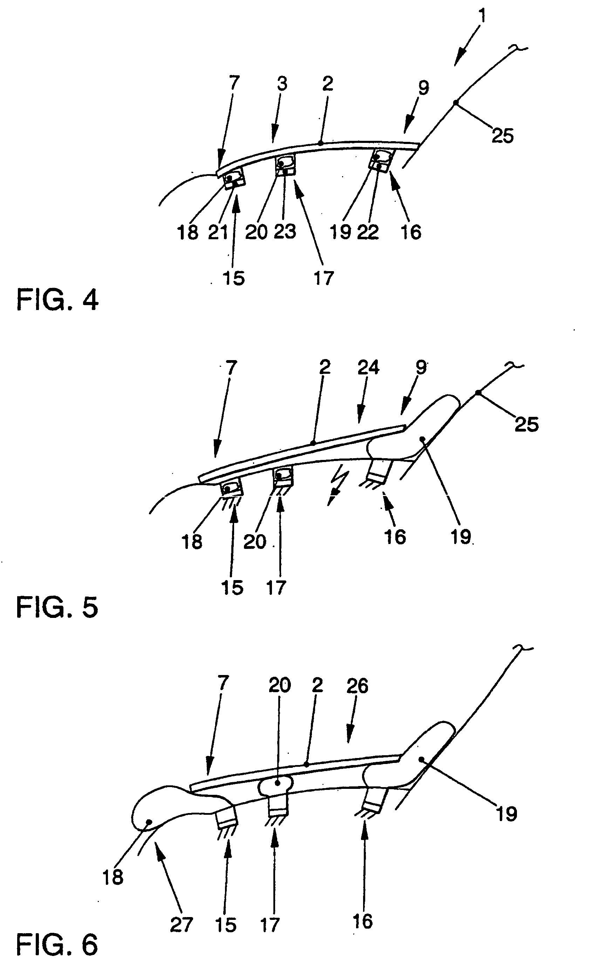

Insgesamt ergeben sich hier somit vielfältige Möglichkeiten, die Fronthauben-Aufprallposition an die jeweils sensierte Kollisionsgegebenheiten anzupassen. Damit ergibt sich eine vorteilhaft optimierte und auf den jeweiligen Kollisionsfall abgestimmte Energieabsorptionsmöglichkeit. In der Fig. 4 ist eine zweite Ausführungsform der erfindungsgemäßen Sicherheitseinrichtung dargestellt. Fig. 4 zeigt ebenfalls das Fahrzeug 1 mit Fronthaube 2 in der Fronthauben-Ruheposition 3. Anstelle der Zylinder-Kolben-Einheiten 4, 5, 6 der in den Fig. 1 bis 3 dargestellten ersten Ausführungsform ist hier jeweils ein Airbagmodul 15, 16, 17 vorgesehen, wobei ein erstes Airbagmodul 15 dem vorderen Haubenkantenbereich 7, ein zweites Airbagmodul 16 dem hinteren Haubenkantenbereich 9 und ein drittes Airbagmodul 17 zwischen dem ersten Airbagmodul 15 und dem zweiten Airbagmodul 16 näher zu dem ersten Airbagmodul 15 hin versetzt im Bereich der Kotflügelbank 8 angeordnet ist.

Jedes dieser Airbagmodule 15, 16, 17 umfasst einen ein- oder mehrkammrigen Airbag 18, 19, 20 dem jeweils ein ein- oder mehrstufiger Gasgenerator 21, 22, 23 zugeordnet ist, wie dies in der Fig. 4 lediglich schematisch dargestellt ist.

Bei einer durch die hier ebenfalls nicht dargestellte pre-crash-Sensoreinrichtung und/oder early-crash-Sensoreinrichtung sensierten Kollision werden in Abhängigkeit von den ebenfalls durch die Sensoreinrichtung sensierten Kollisionsgegebenheiten die Airbagmodule 15, 16, 17 unabhängig voneinander in beliebigen Kombinationen und/oder Zeitabständen so aktiviert, dass die Fronthaube 2 in eine an die jeweils sensierten Kollisionsgegebenheiten entsprechend angepasste Fronthauben-Aufprallposition anhebbar ist, wie dies in den Fig. 5 und 6 wiederum für zwei beispielhaft ausgewählte Einstellmöglichkeiten dargestellt ist.

In der Fig. 5 ist lediglich das zweite Airbagmodul 16 aktiviert, so dass der zweite Airbag 19, der gleichzeitig auch als Scheibenairbag fungiert, die Fronthaube 2 lediglich in einem hinteren Haubenkantenbereich 9 anhebt. Die Fronthaube 2 wird so, z. B. angepasst an einen Kindaufprall, lediglich um eine im vorderen Haubenkantenbereich 7 liegende Drehachse nach oben in eine verschwenkte Fronthauben-Aufprallposition 24 angehoben. Der zweite Airbag 19 umfasst dabei vorzugsweise eine Hauptkammer, die unmittelbar nach Aktivierung des zweiten Airbagmoduls 16 aufgeblasen wird, während zeitversetzt dazu, ggf. über Überströmöffnungen, eine zweite Kammer als Scheibenairbag aufgeblasen wird, die wenigstens einen unteren Teilbereich einer Frontscheibe 25 abdeckt.

In der Fig. 6 ist eine alternative Fronthauben-Aufprallposition 26 dargestellt, bei der sämtliche drei Airbags 18, 19, 20 aktiviert sind, so dass die Fronthaube 2 hier in etwa parallel zur Fronthauben-Ruheposition 3 angehoben ist. Die drei Airbags 18, 19, 20 können dabei zeitversetzt nacheinander oder aber auch gleichzeitig aktiviert worden sein, je nach der sensierten Kollisionsgegebenheit. Insbesondere eignet sich eine derartige Anhebung für eine Kollision des Fahrzeugs 1 mit einem Erwachsenen. Die Airbags 18, 19 und 20 können auch so ausgebildet sein, dass sie den seitlichen Fugenbereich der angehobenen Haube mit abdecken.

Der erste Airbag 18 überdeckt hier femer einen vorderen oberen Frontendbereich 27, so dass ein ggf. mit dem Fahrzeug kollidierender Fußgänger auch hier vor einem Aufprall in ausreichender Weise geschützt ist.

Beiden in den Fig. 1 bis 6 dargestellten Ausführungsformen ist gemeinsam, dass bei einem Aufprall eines Fußgängers auf die Fronthaube 2 zum einen eine Energieabsorption durch eine Deformation der Fronthaube 2 erfolgt, wobei hier durch das Anheben derselben ein ausreichender Deformationsabstand zu darunterliegenden, nicht deformierbaren Fahrzeugteilen geschaffen worden ist. Desweiteren erfolgt eine zusätzliche optimierte Energieabsorption entweder durch ein kraftbegrenztes Nachgeben der Zylinder-Kolben-Einheiten 4, 5, 6 oder durch gezieltes Ausströmen des Gases aus den Airbags 18, 19, 20. Damit ist insgesamt eine Energieabsorption mit einer gezielten Kraft-Weg-Kennung sowie mit einer gezielten Krafteinleitung und -umleitung möglich.

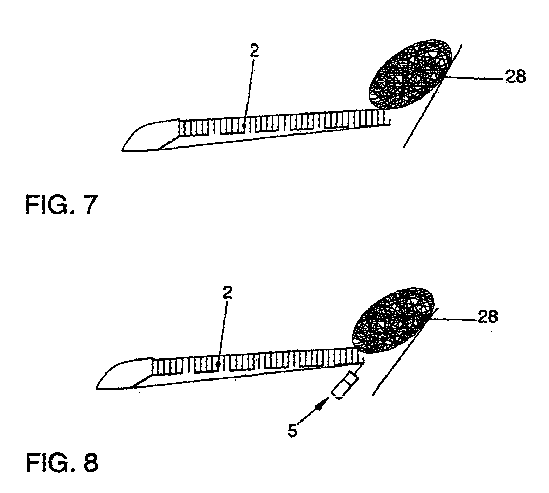

In der Fig. 7 ist ein separater Scheibenairbag 28 dargestellt. Ein derartiger separater Scheibenairbag 28 ist insbesondere in Verbindung mit den in den Fig. 1 bis 3 dargestellten Zylinder-Kolben-Einheiten 4, 5, 6 als zusätzlicher Aufprallschutz zur Frontscheibe 25 hin vorteilhaft, wie dies auch aus der Fig. 8 ersichtlich ist, in der beispielhaft lediglich die zweite Zylinder-Kolben-Einheit 5 eingezeichnet ist.

### BEZUGSZEICHENLISTE

- 1: Fahrzeug
- 2: Fronthaube
- 3: Fronthauben-Ruheposition
- 4: erste Zylinder-Kolben-Einheit
- 5: zweite Zylinder-Kolben-Einheit
- 6: dritte Zylinder-Kolben-Einheit
- 7: vorderer Haubenkantenbereich
- 8: Kotflügelbank
- 9: hinterer Haubenkantenbereich
- 10: Zylinder
- 11: Kolben
- 12: Kolbenstange
- 13: Fronthauben-Aufprallposition
- 14: Fronthauben-Aufprallposition
- 15: erstes Airbagmodul
- 16: zweites Airbagmodul
- 17: drittes Airbagmodul
- 18: erster Airbag
- 19: zweiter Airbag
- 20: dritter Airbag
- 21: erster Gasgenerator
- 22: zweiter Gasgenerator
- 23: dritter Gasgenerator
- 24: Fronthauben-Aufprallposition
- 25: Frontscheibe
- 26: Fronthauben-Aufprallposition
- 27: Frontendbereich
- 28: Scheibenairbag

## Patentansprüche

1. Sicherheitseinrichtung an einem Fahrzeug, insbesondere an einem Kraftfahrzeug, mit einer Fronthaube (2) und mit einer am Fahrzeug angeordneten Sensoreinrichtung, die jeweils Bestandteil der Sicherheitseinrichtung sind, wobei die Sensoreinrichtung mit einer der Fronthaube (2) zugeordneten Energiespeichereinheit als weiterem Bestandteil der Sicherheitseinrichtung gekoppelt ist, die im durch die Sensoreinrichtung aktivierten Zustand die Fronthaube (2) aus einer Fronthauben-Ruheposition (3) in eine Fronthauben-Aufprallposition (13, 14; 24, 26) anhebt, wobei die Energiespeichereinheit wenigstens zwei der Fronthaube (2) zugeordnete Energiespeicher (4, 5, 6; 15, 16, 17) aufweist, **dadurch gekennzeichnet, dass** die wenigstens zwei Energiespeicher (4, 5; 15, 16) in Abhängigkeit von durch die Sensoreinrichtung sensierten Kollisionsgegebenheiten unabhängig voneinander in beliebigen Kombinationen und/oder Zeitabständen aktivierbar sind dergestalt, dass die Fronthaube (2) in unterschiedliche, an die jeweils sensierten Kollisionsgegebenheiten entsprechend angepasste Fronthauben-Aufprallpositionen (13, 14; 24, 26) anhebbar ist.

2. Sicherheitseinrichtung nach Anspruch 1, **dadurch gekennzeichnet, dass** in Fahrzeuglängsrichtung gesehen zu beiden Seiten der Fronthaube (2; 29) jeweils ein erster und ein zweiter Energiespeicher (4, 5; 15, 16) beabstandet voneinander im Bereich einer Kotflügelbank (8) angeordnet sind, und dass der erste Energiespeicher (4; 15) einem vorderen Haubenkantenbereich (7) der Fronthaube (2) und der zweite Energiespeicher (5; 16) einem hinteren Haubenkantenbereich (9) der Fronthaube (2) zugeordnet ist.

3. Sicherheitseinrichtung nach Anspruch 2, **dadurch gekennzeichnet, dass** zwischen dem ersten und zweiten Energiespeicher (4, 5; 15, 16) ein dritter Energiespeicher (6; 17) vorgesehen ist, der vorzugsweise näher zum ersten Energiespeicher (4; 15) hin versetzt ist als zum zweiten Energiespeicher (5; 16).

4. Sicherheitseinrichtung nach einem der Ansprüche 1 bis 3, **dadurch gekennzeichnet, dass** der Energiespeicher durch eine bei einem Aufprall kraftbegrenzt nachgebende Zylinder-Kolben-Einheit (4, 5, 6) und/oder durch ein Airbagmodul (15, 16, 17) gebildet ist.

5. Sicherheitseinrichtung nach Anspruch 4, **dadurch gekennzeichnet, dass** der Energiespeicher (4, 5, 6; 15, 16, 17) pyrotechnisch aktivierbar ist.

6. Sicherheitseinrichtung nach Anspruch 4 oder Anspruch 5, **dadurch gekennzeichnet, dass** jede Zylinder-Kolben-Einheit (4, 5, 6) einen ortsfest am Fahrzeug (1) angeordneten Zylinder (10) umfasst, in dem ein Kolben (11) mitsamt Kolbenstange (12) verschiebbar geführt ist, und dass ein freies Kolbenstangenende mit der Fronthaube (2) gekoppelt ist.

7. Sicherheitseinrichtung nach Anspruch 4 oder Anspruch 5, **dadurch gekennzeichnet, dass** jedes Airbagmodul (15, 16, 17) wenigstens einen ein- oder mehrkammrigen Airbag (18, 19, 20) sowie einen dem wenigstens einen Airbag (18, 19, 20) zugeordneten ein- oder mehrstufigen Gasgenerator (21, 22, 23) umfasst.

8. Sicherheitseinrichtung nach Anspruch 7, **dadurch gekennzeichnet, dass** ein einem hinteren Haubenkantenbereich (9) zugeordneter Airbag (18, 19, 20) im aktivierten Zustand gleichzeitig auch als Scheibenairbag wenigstens einen Teilbereich einer Frontscheibe (25) abdeckt.

9. Sicherheitseinrichtung nach einem der Ansprüche 1 bis 8, **dadurch gekennzeichnet, dass** im Bereich der hinteren Haubenkante (9) der Fronthaube (2) ein separates Scheibenairbagmodul vorgesehen ist, das im aktivierten Zustand wenigstens einen Teilbereich einer Frontscheibe (25) abdeckt.

10. Sicherheitseinrichtung nach einem der Ansprüche 1 bis 9, **dadurch gekennzeichnet, dass** die Sensoreinrichtung zur Erfassung einer drohenden Kollision sowie zur Erfassung der jeweiligen Kollisionsgegebenheiten als pre-crash-Sensoreinrichtung und/oder als early-crash-Sensoreinrichtung ausgebildet ist.

## Claims

1. Safety device on a vehicle, in particular on a motor vehicle, having a front lid (2) and having a sensor device arranged on the vehicle, the front lid and sensor device each being part of the safety device, the sensor device being coupled to an energy storage unit which is assigned to the front lid (2), as a further part of the safety device and, in the state in which it is activated by the sensor device, raises the front lid (2) from a front-lid rest position (3) into a front-lid impact position (13, 14; 24, 26), the energy storage unit having at least two energy stores (4, 5, 6; 15, 16, 17) assigned to the front lid (2), **characterized in that** the at least two energy stores (4, 5; 15, 16) can be activated independently of each other as a function of collision conditions, which are sensed by the sensor device, in any desired combinations and/or intervals in such a manner that the front lid (2) can be raised into different front-lid impact positions (13, 14; 24, 26) which are correspondingly matched to the collision conditions sensed in each case.

2. Safety device according to Claim 1, **characterized in that** a respective first and second energy store (4, 5; 15, 16) are arranged spaced apart from each other on both sides of the front lid (2; 29), as seen in the longitudinal direction of the vehicle, in the region of a winged panel (8), and **in that** the first energy store (4; 15) is assigned to a front lid edge region (7) of the front lid (2) and the second energy store (5; 16) is assigned to a rear lid edge region (9) of the front lid (2).

3. Safety device according to Claim 2, **characterized in that** a third energy store (6; 17) is provided between the first and second energy store (4, 5; 15, 16) and is preferably offset closer towards the first energy store (4; 15) than towards the second energy store (5; 16).

4. Safety device according to one of Claims 1 to 3, **characterized in that** the energy store is formed by a cylinder/piston unit (4, 5, 6) which yields under a defined force in the event of an impact and/or by an airbag module (15, 16, 17).

5. Safety device according to Claim 4, **characterized in that** the energy store (4, 5, 6; 15, 16, 17) can be activated pyrotechnically.

6. Safety device according to Claim 4 or Claim 5, **characterized in that** each cylinder/piston unit (4, 5, 6) comprises a cylinder (10) which is arranged fixed in position on the vehicle (1) and in which a piston (11) together with a piston rod (12) is displaceably guided, and **in that** a free piston-rod end is coupled to the front lid (2).

7. Safety device according to Claim 4 or Claim 5, **characterized in that** each airbag module (15, 16, 17) comprises at least one single- or multi-chambered airbag (18, 19, 20) and a single- or multi-stage gas generator (21, 22, 23) assigned to the at least one airbag (18, 19, 20).

8. Safety device according to Claim 7, **characterized in that** an airbag (18, 19, 20) which is assigned to a rear lid edge region (9) and is simultaneously also in the form of a windscreen airbag covers, when activated, at least a subregion of a windscreen (25).

9. Safety device according to one of Claims 1 to 8, **characterized in that** a separate window airbag module is provided in the region of the rear lid edge (9) of the front lid (2) and, when activated, covers at least a subregion of a windscreen (25).

10. Safety device according to one of Claims 1 to 9, **characterized in that** the sensor device is formed as a pre-crash sensor device and/or as an early-crash sensor device in order to detect an imminent collision and to detect the particular collision circumstances.

## Revendications

1. Dispositif de sécurité sur un véhicule, notamment sur un véhicule automobile, avec un capot frontal (2) et avec un système de capteurs disposé sur le véhicule, qui est respectivement un élément du dispositif de sécurité, le système de capteurs étant accouplé avec une unité d'accumulation d'énergie associée au capot frontal (2), en tant qu'élément supplémentaire du dispositif de sécurité, qui dans l'état activé par le système de capteurs relève le capot frontal (2) d'une position de repos du capot frontal (3) en une position d'impact du capot frontal (13, 14 ; 24, 26), l'unité d'accumulation d'énergie comprenant au moins deux accumulateurs d'énergie (4, 5, 6 ; 15, 16, 17) associés au capot frontal (2), **caractérisé en ce qu'**en fonction des conditions de collision captées par le système de capteurs, les accumulateurs d'énergie (4, 5 ; 15, 16) qui sont au moins au nombre de deux, sont activables, indépendamment l'un de l'autre dans une combinaison quelconque et/ou à des intervalles de temps quelconques, de façon à ce que le capot frontal (2) soit relevable dans différentes positions de collision du capot frontal (13, 14 ; 24, 26), adaptées en conséquence aux conditions de collision respectivement captées.

2. Dispositif de sécurité selon la revendication 1, **caractérisé en ce que** respectivement un premier et un second accumulateur d'énergie (4, 5 ; 15, 16) distancés entre eux sont disposés dans la région d'une courbure de l'aile (8), dans la direction longitudinale du véhicule vers les deux côtés du capot frontal (2 ; 29) et **en ce que** le premier accumulateur d'énergie (4 ; 15) est associé à une région antérieure du bord (7) du capot frontal (2) et le second accumulateur d'énergie (5 ; 16) est associé à une région postérieure du bord (9) du capot frontal (2).

3. Dispositif de sécurité selon la revendication 2, **caractérisé en ce qu'**un troisième accumulateur d'énergie (6 ; 17) qui est décalé de préférence plus à proximité du premier accumulateur d'énergie (4 ; 15) que du second accumulateur d'énergie (5 ; 16) est prévu entre le premier et le second accumulateur d'énergie (4, 5 ; 15, 16).

4. Dispositif de sécurité selon l'une quelconque des revendications 1 à 3, **caractérisé en ce que** l'accumulateur d'énergie est formé par une unité cylindre-piston (4, 5, 6) qui se dérobe à force limitée lors d'une collision et/ou par un module airbag (15, 16, 17).

5. Dispositif de sécurité selon la revendication 4, **caractérisé en ce que** l'accumulateur d'énergie (4, 5, 6 ; 15, 16, 17) est activable par voie pyrotechnique.

6. Dispositif de sécurité selon l'une quelconque des revendications 4 ou 5, **caractérisé en ce que** chaque unité cylindre/piston (4, 5, 6) comprend un cylindre (10) fixement disposé sur le véhicule (1), dans lequel un piston (11) avec sa tige de piston (12) est guidé de façon déplaçable et **en ce qu'**une extrémité libre de la tige de piston est accouplée avec le capot frontal (2).

7. Dispositif de sécurité selon l'une quelconque des revendications 4 ou 5, **caractérisé en ce que** chaque module airbag (15, 16, 17) comprend au moins un airbag à un ou à plusieurs compartiment(s) (18, 19, 20), ainsi qu'un générateur de gaz à un ou à plusieurs étages (21, 22, 23) associé à l'airbag (18, 19, 20) qui est au moins au nombre de un.

8. Dispositif de sécurité selon la revendication 7, **caractérisé en ce qu'**à l'état activé, un airbag associé à une région postérieure du bord (9) du capot et agissant simultanément en tant qu'airbag de pare-brise recouvre au moins une zone partielle d'un pare-brise (25).

9. Dispositif de sécurité selon l'une quelconque des revendications 1 à 8, **caractérisé en ce qu'**un module séparé d'airbag de pare-brise, qui à l'état activé recouvre au moins une zone partielle d'un pare-brise (25) est prévu dans la région du bord postérieur (9) du capot frontal.

10. Dispositif de sécurité selon l'une quelconque des revendications 1 à 9, **caractérisé en ce que** le système de capteurs pour la détection d'un risque de collision et pour la détection des conditions respectives de la collision est conçu sous forme de système de capteurs pre-cash et/ou de système de capteurs early-crash.
